# EUROPÄISCHE PATENTANMELDUNG

(11) **EP 2 687 819 A1**
(43) Veröffentlichungstag der Anmeldung: **22.01.2014**
(21) Anmeldenummer: 12177124.0
(22) Anmeldetag: 19.07.2012
(51) Int. Cl.: G01C 21/34, G06Q 50/10, G06Q 50/16, G08G 1/00, G06F 17/30, H04W 4/02, H04L 29/08

(54) **Aufbereitung von ortsbezogenen Daten**

(71) Anmelder: Deutsche Post AG, 53113 Bonn (DE)
(72) Erfinder: Josefiak, Frank, 53177 Bonn Bad Godesberg (DE); Petkov, Filip, 50968 Köln (DE)
(74) Vertreter: Cohausz & Florack

(57) **Zusammenfassung**

Für eine effizientere Nutzung sicherheits- und/oder mobilitätsrelevanter Daten werden Daten aus mehreren Datenquellen 230, 231, 232, 233 eingelesen. Anhand der Daten jeder Datenquelle lassen sich Sätze von Koordinaten von für einen jeweiligen Aspekt relevanten realen Orten bestimmen. Basierend auf jeweils einem Satz Koordinaten für jeden der realen Orte wird dann für jede der Datenquellen eine jeweilige Fläche definiert und ein dieser zugeordneter Wert bestimmt. Für eine jeweilige Datenquelle definierte überlappende Flächen werden zusammengefasst zum Erhalten von nicht-überlappenden Flächen mit mindestens einem zugeordneten Wert für jede der Datenquellen. Die auf den Daten aus den Datenquellen basierenden nicht-überlappenden Flächen werden mit den zugeordneten Werten überlagert. Das Resultat ist eine Werteverteilung, die eine Gesamtsituation in Hinblick auf die mindestens zwei Aspekte in einem realen Gebiet widerspiegelt. Eine Vorrichtung 100, ein System, ein Programm 121 und ein Speichermedium 120 sind entsprechend ausgebildet.

## Beschreibung

### Gebiet der Erfindung

Die vorliegende Erfindung betrifft unter anderem ein Verfahren, eine Vorrichtung, ein System, ein Programm und ein Speichermedium zum Aufbereiten von ortsbezogenen Daten.

### Hintergrund der Erfindung

Ortsbezogene Daten können verschiedene Aspekte betreffen, beispielsweise sicherheits- und/oder mobilitätsrelevante Aspekte, aber ebenso diverse andere Aspekte. Ortsbezogene sicherheits- und mobilitätsrelevante Daten ermöglichen es einem Nutzer, die Lage in einer Gegend oder entlang einer Strecke zu beurteilen.

Verschiedene spezifische sicherheitsrelevante Information sind frei verfügbar. So stellt beispielsweise die britische Polizei Informationen über Verbrechen ins Internet. Mittels eines Zugriffs auf diese Informationen lassen sich die Orte, an denen ein Mord, ein Raub, oder ein anderes Verbrechen stattgefunden hat, auf einem Display in einer Karte anzeigen.

Ähnliche Information existieren in den U.S.A. zum Beispiel für die Wohnorte von Sexualstraftätern, um so die Wahl eines vermeintlich sicheren Umfelds für Wohnungssuchende zu erlauben. Auch Google stellt erste sicherheitsrelevante Informationen in Form von POIs (Points of Interest) zur Verfügung, zum Beispiel Informationen zu Hochwasser und Brandstellen.

Des Weiteren sind Datenquellen bekannt, die Staumeldungen oder Informationen zu staugefährdeten Strecken bereitstellen.

Daten zu unterschiedlichen Aspekten werden in der Regel von unterschiedlichen Anbietern über unterschiedliche Datenquellen bereitgestellt.

### Allgemeine Beschreibung einiger beispielhafter Ausführungsformen der Erfindung

Die Erfindung basiert auf der Überlegung, dass Informationen aus einer einzelnen Datenquelle für einen Nutzer nicht ausreichend sein mögen, um eine Lage so umfassend wie gewünscht beurteilen zu können. Wenn zum Beispiel die Route für einen Werttransport geplant werden soll, so ist neben der optimalen Streckenlänge und der optimalen Zustellzeit nicht nur wichtig, dass auf dem Weg minimale Standzeiten zu erwarten sind, sondern beispielsweise auch, dass die Risiken eines Überfalls sowie eines Unfalls minimiert werden. In einer anderen beispielhaften Situation mag ein Nutzer planen, ein Haus in einer bestimmten Gegend zu kaufen. Dann interessieren ihn wohlmöglich nicht nur Anzahl und Verteilung der in der Umgebung wohnhaften Sexualstraftäter, sondern beispielsweise auch die Anzahl und Verteilung von Einbrüchen, Diebstählen oder Mordfällen und/oder die Unfallschwerpunkte auf dem Weg der Kinder zum Kindergarten.

Die Erfindung basiert ferner auf der Überlegung, dass mit jeder weiteren Datenquelle und jedem weiteren Anbieter solcher Datenquellen nicht nur die Analysemöglichkeiten und Synergien, sondern auch die Komplexität der Auswertung erheblich zunimmt, die eine manuelle Auswertung schnell unpraktikabel, wenn nicht unmöglich macht.

Die Erfindung basiert ferner auf der Überlegung, dass die Kenntnis einer Vielzahl von punktuellen, relevanten Orten wenig geeignet sind, einem Nutzer einen anschaulichen Überblick über eine Lage zu liefern oder eine effiziente automatische Auswertung der Lage zu erlauben.

Der Erfindung liegt daher die Aufgabe zugrunde eine Möglichkeit bereitzustellen, Daten aus mehreren Datenquellen effizienter zu nutzen.

Die Aufgabe wird gelöst durch ein Verfahren gemäß Anspruch 1, eine Vorrichtung gemäß Anspruch 14, ein System gemäß Anspruch 15, ein Programm gemäß Anspruch 16 und ein Speichermedium. Weitere Ausführungsformen sind den abhängigen Ansprüchen zu entnehmen.

Ein beispielhaftes erfindungsgemäßes Verfahren umfasst, ausgeführt von zumindest einer Vorrichtung, ein Einlesen von Daten aus mindestens zwei Datenquellen, wobei sich anhand der Daten jeder der mindestens zwei Datenquellen Sätze von Koordinaten von für einen jeweiligen Aspekt relevanten realen Orten bestimmen lassen. Das Verfahren umfasst ferner ein Definieren einer jeweiligen Fläche basierend auf jeweils einem Satz Koordinaten für jeden der realen Orte für jede der mindestens zwei Datenquellen und ein Bestimmen mindestens eines der jeweiligen Fläche zugeordneten Werts. Das Verfahren umfasst ferner ein Zusammenfassen von für eine jeweilige Datenquelle definierten überlappenden Flächen zum Erhalten von nicht-überlappenden Flächen mit mindestens einem zugeordneten Wert für jede der mindestens zwei Datenquellen. Das Verfahren umfasst ferner ein Überlagern der auf den Daten aus den mindestens zwei Datenquellen basierenden nicht-überlappenden Flächen mit den zugeordneten Werten zum Erhalten einer Werteverteilung, die eine Gesamtsituation in Hinblick auf die mindestens zwei Aspekte in einem realen Gebiet widerspiegelt.

Die Erfindung sieht also für bestimmte beispielhafte Ausführungsformen vor, dass eine Vorrichtung Daten aus mehreren Datenquellen einlesen kann, die Daten zu verschiedenen Aspekten bereitstellen. Die Daten umfassen einen jeweiligen Satz Koordinaten für verschiedene relevante reale Orte oder erlauben eine Ermittlung solcher Sätze von Koordinaten. Zunächst kann dann für jeden Satz Koordinaten und damit für jeden relevanten Ort eine Fläche mit mindestens einem zugeordneten Wert definiert werden. Jede Fläche repräsentiert dabei eine reale Fläche in einem realen Gebiet. Der mindestens eine Wert, der einer Fläche zugewiesen wird, ist als quantitativer Wert zu verstehen und kann zum Beispiel die (anfängliche) Bedeutung oder Wichtigkeit der Fläche für einen bestimmten Aspekt repräsentieren. Der Begriff "Wert" kann dabei aus Gründen der Anschaulichkeit zum Beispiel als Höhe der Fläche angesehen werden. Sind einer Fläche als mindestens einem Wert mehrere Werte zugeordnet, so weist die Fläche an unterschiedlichen Stellen unterschiedliche Werte auf.

Wenn reale Orte, für die für eine bestimmte Datenquelle Flächen definiert wurden, nahe beieinander liegen, können die definierten Flächen einander überlappen. Die überlappenden Flächen werden separat für jede Datenquelle zusammengefasst, so dass für jede Datenquelle ein Satz von nicht-überlappenden Flächen vorhanden ist, die insgesamt die gleichen Teile des realen Gebiets abdecken wie zuvor die Gesamtheit der definierten Flächen. Das heißt, im Resultat ist jeder möglichen Position in dem realen Gebiet für jede Datenquelle höchstens noch eine Fläche und ein Wert zugeordnet. Es versteht sich, dass für andere Zwecke weiterhin bestimmten Positionen mehrere Flächen und/oder mehrer Werte zugeordnet sein können.

Die nicht-überlappenden Flächen mit zugeordneten Werten für verschiedene Datenquellen werden dann überlagert. Die resultierende Werteverteilung spiegelt ein Gesamtbild der Lage wider. Mit der Werteverteilung kann jeder Position in dem realen Gebiet ein Gesamtwert zugeordnet sein, wobei sich der Gesamtwert aus einer beliebigen Kombination der Werte der einzelnen Datenquellen für diese Position ergeben kann. Beispiele für eine solche Kombination umfassen ein Summieren von gewichteten oder nicht-gewichteten Werten der einzelnen Datenquellen für eine jeweilige Position, wobei das Summieren optional weiteren Randbedingungen unterliegen kann, wie etwa einem zulässigen Höchstwert für den Gesamtwert. Die Werteverteilung kann beispielsweise für eine jeweilige Position nur einen Gesamtwert für alle Datenquellen umfassen. Alternativ kann sie für eine jeweilige Position beispielsweise Einzelwerte für jede Datenquelle und einen Gesamtwert umfassen. Weiter alternativ kann sie für eine jeweilige Position beispielsweise kumulierende Einzelwerte für jede Datenquelle umfassen, so dass der letzte Einzelwert gleichzeitig einem Gesamtwert entspricht, etc. Größere Gesamtwerte könnten dann zum Beispiel auf mit einem größeren Nachteil behaftete Gegenden hinweisen. Alternativ könnten aber zum Beispiel größere Gesamtwerte ebenso auch auf Gegenden hinweisen, die besonders vorteilhaft sind.

Die Verarbeitung nach dem Einlesen der Daten kann von einer oder mehreren Vorrichtungen durchgeführt werden, die optional die einlesende Vorrichtung umfassen.

Ein möglicher Vorteil der Erfindung liegt darin, dass sie einen guten Überblick über eine Lage in einem Gebiet in Hinblick auf ausgewählte Aspekte liefern kann, die weder mit einer manuellen Auswertung verschiedener Datenquellen noch mit einer simplen Überlagerung von Punkten auf einer Karte erzielbar ist. Die Definition von Flächen und Werten für jeden Koordinatensatz kann außerdem dazu genutzt werden, um ein einheitliches Datenformat für alle Datenquellen zu erhalten, selbst wenn die eingelesenen Daten aus verschiedenen Datenquellen zunächst unterschiedliche Formate aufweisen. Die zunächst separate Verarbeitung der Flächen für jede Datenquelle ermöglicht zudem eine besonders flexible Verarbeitung der eingelesenen Daten.

Eine beispielhafte erfindungsgemäße Vorrichtung umfasst Mittel zur Ausführung des erfindungsgemäßen Verfahrens. Die Vorrichtung ist beispielsweise eine Datenverarbeitungsvorrichtung, zum Beispiel ein Server oder ein Endgerät.

Eine beispielhafte erfindungsgemäße Vorrichtung umfasst zum Beispiel zumindest einen Prozessor und zumindest einen Speicher, wobei in dem Speicher ein Programmanweisungen umfassendes Programm gespeichert ist, und wobei der Speicher und das Programm eingerichtet sind, um, mit dem Prozessor, die Vorrichtung zumindest zu veranlassen, das erfindungsgemäße Verfahren auszuführen, wenn das Programm auf dem Prozessor ausgeführt wird. Die Vorrichtung ist beispielsweise softwaremäßig eingerichtet, um das Verfahren ausführen zu können. Unter softwaremäßig eingerichtet soll dabei insbesondere die Vorbereitung der Vorrichtung verstanden werden, die notwendig ist, um ein Verfahren beispielsweise in Form eines Programms auf dem Prozessor ausführen zu können.

Unter einem Prozessor sollen unter anderem eine oder mehrere Kontrolleinheiten, Mikroprozessoren, Mikrokontrolleinheiten wie Mikrocontroller, digitale Signalprozessoren (DSP), Anwendungsspezifische Integrierte Schaltungen (ASIC) oder Field Programmable Gate Arrays (FPGA) verstanden werden.

Ein Speicher ist beispielsweise ein Programmspeicher und/oder ein Hauptspeicher des Prozessors und/oder eine Datenbank und/oder ein Cache. Unter einem Programmspeicher soll unter anderem ein nicht-flüchtiger Speicher und unter einem Hauptspeicher ein flüchtiger oder ein nicht-flüchtiger Speicher, insbesondere ein Speicher mit wahlfreiem Zugriff (RAM) und/oder ein Flash-Speicher, verstanden werden. Nicht-flüchtige Speicher sind z.B. Speicher mit wahlfreiem Zugriff (RAM) wie z.B. NOR-Flash-Speicher oder mit sequentiellem Zugriff wie z.B. NAND-Flash-Speicher und/oder Speicher mit Nur-Lese-Zugriff (ROM) wie z.B. EPROM-, EEPROM-, oder ROM-Speicher. Der Speicher kann beispielsweise gegenständlich ausgebildet sein.

Ein beispielhaftes erfindungsgemäßes System umfasst mindestens zwei Vorrichtungen mit Mitteln zur gemeinsamen Ausführung des erfindungsgemäßen Verfahrens. In einem alternativen erfindungsgemäßen System umfasst das System eine erfindungsgemäße Vorrichtung und mindestens eine Datenquelle.

Ein beispielhaftes erfindungsgemäßes Programm umfasst Programmanweisungen, wobei die Programmanweisungen eine Vorrichtung zur Ausführung des erfindungsgemäßen Verfahrens veranlassen, wenn das Programm von dem Prozessor ausgeführt wird. Ein Programm ist beispielsweise über ein Netz wie ein lokales Netz, ein Weitverkehrsnetz, ein virtuelles Netz, ein Funknetz, wie ein Mobilfunknetz, ein sonstiges Telefonnetz und/oder das Internet verteilbar. Ein Programm kann zumindest teilweise Software und/oder Firmware eines Prozessors sein. Zum Beispiel ist das erfindungsgemäß Programm in einem Speicher der erfindungsgemäßen Vorrichtung gespeichert.

Ein beispielhaftes erfindungsgemäßes Speichermedium speichert das erfindungsgemäße Programm. Das Speichermedium ist beispielsweise ein computerlesbares Speichermedium, welches das erfindungsgemäße Programm enthält und zum Beispiel als magnetisches, elektrisches, elektromagnetisches, optisches und/oder andersartiges Speichermedium ausgebildet ist. Das Speichermedium kann insbesondere ein physikalisches und/oder gegenständliches Speichermedium sein. Das Speichermedium ist beispielsweise tragbar oder in einer Vorrichtung fest installiert. "Computerlesbar" soll insbesondere so verstanden werden, dass das Speichermedium von einem Computer bzw. einer Datenverarbeitungsvorrichtung (aus)gelesen und/oder beschrieben werden kann, beispielsweise von einem Prozessor. Das Speichermedium ist beispielsweise ein Programmspeicher eines Prozessors.

In einer beispielhaften Ausführungsform ist die für einen jeweiligen Satz Koordinaten definierte Fläche für mindestens eine der Datenquellen ein Quadrat. Eine quadratische Form ermöglicht eine besonders einfache Definition einer Fläche und ein besonders einfaches Zusammenfassen von überlappenden Flächen. Ein Quadrat kann beispielsweise mittels seiner vier Eckpunkte und die diese Eckpunkte verbindenden Kanten definiert werden. Die Ausrichtung des Quadrats kann festgelegt sein. Andere relativ einfach zu definierende Formen, wie eine Kreisform oder ein Polygon, sind ebenfalls möglich. Prinzipiell kann aber jede geometrische Form verwendet werden. Einige Formen können aber spätestens bei einer Vielzahl von zusammenzufassenden überlappenden Flächen zu einer nicht-überlappenden Fläche zu einer sehr komplexen Definition und damit zu einem sehr hohen Rechenaufwand fuhren.

In einer beispielhaften Ausführungsform wird für mindestens eine der Datenquellen für jeden Satz Koordinaten jeweils eine Fläche definiert, die eine Aussparung um den durch den Satz Koordinaten definierten Ort herum aufweist. Es versteht sich, dass auch solche Aussparungen eine beliebige Form aufweisen können.

Für verschiedene Datenquellen könnten außerdem auch verschiedene Formen verwendet werden. Es wäre sogar möglich, für eine Datenquelle verschiedene Formen vorzusehen.

In einer beispielhaften Ausführungsform weist die Größe und/oder der mindestens eine Wert der für einen jeweiligen Satz Koordinaten definierten Fläche für mindestens eine der Datenquellen mindestens einen vorgegebenen Wert auf. Dies ermöglicht eine besonders einfache Definition der Flächen bzw. eine besonders einfache Bestimmung des zugeordneten Werts. Die Größe der Fläche und/oder der mindestens eine der Fläche zugeordnete Wert kann aber für mindestens eine der Datenquellen auch ganz oder teilweise von den eingelesenen Daten aus der jeweiligen Datenquelle abhängen.

Die Größe der Fläche kann zum Beispiel so festgelegt werden, dass sie für einen bestimmten Aspekt in der Regel als ausreichend angesehen wird. Beispielsweise könnte für eine Datenquelle mit Informationen zu Mordfällen mit der Fläche ein Umkreis von 200 Metern um den jeweiligen Tatort herum abgedeckt werden, und für eine Datenquelle mit Informationen zu Terroranschlägen könnte ein Umkreis von 1 km um den Ort des jeweiligen Anschlags herum abgedeckt werden. Für eine Datenquelle mit Informationen zu Tankstellen könnte die Fläche beispielsweise einen Umkreis von 23 km um die Tankstelle herum abdecken, etc. Die Größe der Flächen könnte aber auch für alle Datenquellen auf den gleichen Wert festgelegt werden. Weiter alternativ könnte die Größe einer Fläche beispielsweise so gewählt werden, dass sie bis zu den jeweils nächsten Straßenkreuzungen reicht. Dies erfordert jedoch mehr Rechenaufwand als die Nutzung einer oder mehrerer festgelegter Größen, sowie die zusätzliche Berücksichtigung von Straßeninformationen bereits zu Beginn der Verarbeitung.

Verschiedenen Flächen für eine Datenquelle können gleiche oder unterschiedliche Werte zugeordnet werden. Für die Zuordnung unterschiedlicher Werte könnte jedem Satz Koordinaten aus der Datenquelle eine Zusatzinformation zugeordnet sein und mit eingelesen werden. Beispielsweise könnte für einer Datenquelle, die Stauinformationen bereit stellt, den Flächen zu den Koordinaten für einen normalen Stau ein erster, relativ niedriger Wert zugeordnet werden, und den Flächen zu den Koordinaten für eine Streckensperrung ein sehr hoher Wert, der anzeigt, dass ein Gebiet nicht zugänglich bzw. nicht befahrbar ist. Weiter beispielsweise könnte für eine Datenquelle, die Hochwasserinformationen bereitstellt, den Flächen ein Wert zugeordnet werden, der der jeweiligen Höhe des Hochwassers entspricht. Weiter beispielsweise könnte für eine Datenquelle, die Informationen zu verschiedenen Arten von Verbrechen liefert, ein höherer Wert für Mord als für Diebstahl zugeordnet werden, etc. Des Weiteren kann einer für einen jeweiligen Satz Koordinaten definierten Fläche nicht nur ein einzelner, einheitlicher Wert zugeordnet werden, sondern es können ihr auch über die Fläche variierende Werte zugeordnet werden. Ist die Fläche beispielsweise um einen durch den Satz Koordinaten definierten Ort herum angelegt, so kann der Wert mit der Entfernung vom Mittelpunkt kontinuierlich oder in Stufen abnehmen, etc. Bei einer Datenquelle, die Staudaten liefert, kann damit beispielsweise der Annahme Rechnung getragen werden, dass es umso vorteilhafter sein kann, je weiter man vom Staumittelpunkt entfernt bleibt. Umgekehrt könnte, insbesondere bei einer Fläche mit Aussparung, der mindestens eine Wert auch eine Mehrzahl von Werten umfassen, die der Fläche derart zugeordnet sind, dass sie mit wachsendem Abstand zu einem durch den Satz Koordinaten definierten Ort zumindest bis zu einem Maximalwert kontinuierlich oder in Stufen größer werden. Bei einer Datenquelle, die Informationen zu einer bestimmten Art von Einrichtungen liefert, kann damit beispielsweise der Annahme Rechnung getragen werden, dass es umso vorteilhafter sein kann, je geringer die Entfernung zu derartigen Einrichtungen gehalten wird.

In einer beispielhaften Ausführungsform ist mindestens einem der Sätze von Koordinaten, die sich aus den Daten von mindestens einer der Datenquellen bestimmen lassen, ein Zeitpunkt zugeordnet. Die Größe und/oder der zugeordnete Wert der Fläche für den mindestens einen Satz von Koordinaten kann dann auch abhängig von dem für diesen Satz Koordinaten angegebenen Zeitpunkt bestimmt werden. Beispielsweise können für Koordinaten mit älteren zugewiesenen Zeitpunkten kleinere Flächen und/oder geringere Werte vorgesehen werden, so dass ältere Daten einen geringeren Einfluss auf die Werteverteilung erhalten. Damit kann prinzipiellen Änderungen in einem Gebiet Rechnung getragen werden. Zum Beispiel könnte eine Änderung der Straßenführung oder eine verstärkte Geschwindigkeitskontrolle dazu führen, dass sich die Unfallrate an einer Kreuzung reduziert und dass eine hohe Anzahl an alten Unfällen weniger aussagekräftig ist. Ähnlich könnten erhöhte Sicherheitsmaßnahmen, eine bessere Beleuchtung, verstärkte Polizeikontrollen oder eine neu eingerichtete Videoüberwachung in einer Straße dazu führen, dass die Anzahl der Überfälle in einer Straße deutlich zurückgehen, so dass eine hohe Anzahl an alten Überfällen weniger aussagekräftig ist.

Zusammengefasst kann die Wertezuordnung zu Flächen und/oder die Größe von Flächen für eine einzelne Datenquelle somit bei Bedarf unter Berücksichtigung von mindestens einem von mindestens vier verschiedenen Parametern erfolgen: der Aktualität der Daten, der Häufigkeit von Vorkommnissen, der Bedeutung von Vorkommnissen oder Zuständen und der Entfernung von einem durch einen Satz Koordinaten definierten Ort. Eine kombinierte Berücksichtigung mehrere dieser Parameter für eine einzelne Datenquelle ist dabei möglich. Im Fall von Staudaten können etwa aktuelle Stauvorkommnisse je nach Schwere des Staus bewertet werden, die sich aus Dauer, Länge und Umfahrungsmöglichkeiten ergeben kann, historische Staudaten können mit geringerer Wertung hinzugefügt werden, und zusätzlich kann in beiden Fällen die Entfernung berücksichtigt werden.

In einer beispielhaften Ausführungsform wird bei dem Zusammenfassen der Flächen für mindestens eine Datenquelle allen nicht-überlappenden Flächen ein einheitlicher und über die jeweilige Fläche konstanter Wert zugeordnet. Dies kommt insbesondere dann im Betracht, wenn bereits allen anhand der Koordinaten definierten Flächen für die Datenquelle ein einziger, gleicher Wert zugeordnet wurde. Eine solche Datenquelle kann zum Beispiel eine Datenquelle sein, die Informationen zu einem aktuellen Zustand bereitstellt, wie etwa zu der Verfügbarkeit bzw. nicht-Verfügbarkeit eines bestimmten Dienstes.

Sind aber unterschiedlichen Flächen für eine Datenquelle verschiedene Werte zugeordnet, oder sind einer jeweiligen Fläche mehrere Werte zugeordnet, so könnte diesen Unterschieden auch beim Zusammenfassen der Flächen Rechnung getragen werden. Bei dem Zusammenfassen der Flächen zu nicht-überlappenden Flächen könnte hierzu beispielsweise für jede Stelle der höchste Wert - oder je nach Definition der niedrigste Wert - der ursprünglichen Flächen an dieser Stelle verwendet werden.

In einer weiteren beispielhaften Ausführungsform werden bei dem Zusammenfassen der Flächen für mindestens eine der Datenquellen die den definierten Flächen zugeordneten Werte in den überlappenden Bereichen kumuliert, etwa durch Aufsummieren der Werte für eine jeweilige Position. Eine solche Datenquelle kann zum Beispiel eine Datenquelle sein, die Informationen bereitstellt, die auf einem längeren Zeitraum basieren, wie etwa Informationen zu Unfällen oder Verbrechen. Durch das kumulierende Zusammenfassen kann erreicht werden, dass mehreren gleichartigen Ereignissen in großer Nähe zueinander eine höhere Bedeutung zugewiesen wird als einem einzelnen Ereignis in einem bestimmten Gebiet. So kann angenommen werden, dass an einer Kreuzung mit vielen registrierten Unfällen das Risiko für einen Unfall größer ist als an einer Kreuzung für die bislang nur ein einziger Unfall registriert wurde. Ebenso kann angenommen werden, dass in einer Straße mit mehreren registrierten Überfällen das Risiko für einen Überfall größer ist, als in einer Straße mit einem einzigen registrierten Überfall, usw. Den ursprünglichen Flächen für eine Datenquelle kann dabei wiederum stets der gleiche Wert zugeordnet worden sein, oder es können ihnen, zum Unterscheiden der Wichtigkeit, unterschiedliche Werte zugeordnet worden sein. Die Werte können in einigen Ausführungsformen vor der Weiterverarbeitung noch normalisiert werden. So könnten die Werte für eine jeweilige Datenquelle nach einer Summierung für alle überlappenden Flächen auf eine einheitliche Skala von 0 bis 1 oder eine beliebige andere Skala gebracht werden. Hierdurch können allzu große Unterschiede sowohl zwischen den Werten einer Datenquelle als auch zwischen den Werten verschiedener Datenquellen vermieden werden.

Wird dagegen in einer beispielhaften Ausführungsform die Fläche für jeden Satz Koordinaten für eine Datenquelle so definiert, dass sie eine Aussparung um den durch den Satz Koordinaten definierten Ort herum aufweist, so kann das Zusammenfassen für diese Datenquellen in einer einzigen nicht-überlappenden Fläche mit Aussparungen um alle durch die Sätze Koordinaten definierten Orte herum resultieren. Eine solche Datenquelle kann zum Beispiel eine Datenquelle sein, die die Koordinaten von bestimmten Einrichtungen angibt, wie die von Tankstellen, Restauratoren, etc. So kann etwa für einen Kunsttransport von einer Versicherung vorgegeben werden, dass an jeder Stelle des Weges ein Restaurator innerhalb einer bestimmten Zeit erreichbar sein muss. Die beispielhafte Ausführungsform erlaubt dann, eine Route so auszuwählen, dass sie stets durch die Aussparungen führt und somit ein Restaurator in der Regel in der vorgegebenen Zeit erreichbar ist.

Die zunächst separate Verarbeitung der Daten für jede Datenquelle ermöglicht beispielsweise eine variable Gewichtung der Datenquellen je nach Relevanz in verschiedenen Situationen.

In einer beispielhaften Ausführungsform umfasst das Verfahren ein Erfassen einer Nutzereingabe, die eine Gewichtung für die mindestens zwei Datenquellen vorgibt, und ein Verwenden der vorgegebenen Gewichtungen zur Einstellung des Einflusses der mindestens zwei Datenquellen auf die Werteverteilung. Das kann den Vorteil bieten, dass ein Nutzer selber bestimmen kann, welche Bedeutung verschiedene Arten von Daten für seinen Zweck haben. Für einen Wertguttransport kann beispielsweise das Umfahren von Gebieten mit vielen Überfällen 2,5 mal wichtiger sein, als das Vermeiden eines Staus.

Das Verwenden der vorgegebenen Gewichtungen zur Einstellung des Einflusses der mindestens zwei Datenquellen auf die Werteverteilung kann auf verschiedene Weisen realisiert werden. In einer beispielhaften Ausführungsform erfolgt ein Gewichten der den nicht-überlappenden Flächen zugeordneten Werte für jede der mindestens zwei Datenquellen gemäß der vorgegebenen Gewichtung vor der Überlagerung der nicht-überlappenden Flächen. In einer alternativen beispielhaften Ausführungsform erfolgt stattdessen bereits ein Bestimmen der Werte der definierten Flächen für jede der mindestens zwei Datenquellen unter Berücksichtigung der vorgegebenen Gewichtung.

In einer beispielhaften Ausführungsform erfolgt des Weiteren ein Speichern von Daten zu den nicht-überlappenden Flächen und den zugeordneten Werten für mindestens eine der Datenquellen als Grundlage für eine wiederholte Überlagerung. Hierdurch können die für die Berechnung dieser Daten notwendigen Ressourcen reduziert werden. Das kann sowohl die Rechenleistung betreffen, wie auch, bei einer verteilten Verarbeitung in mehreren Vorrichtungen, die Menge an zu übertragenden Daten. Zusätzlich kann das Verwenden gespeicherter Daten die Zeit erheblich verkürzen, bis ein Ergebnis vorliegt. Auch der Aufwand, die Daten zu beschaffen, kann sich so in beispielhaften Ausführungsformen reduzieren lassen.

In einer beispielhaften Ausführungsform umfasst das Verfahren ferner ein Präsentieren eines, die Werteverteilung veranschaulichenden, dreidimensionalen Profils mittels einer Anzeigeeinheit oder ein Präsentieren eines, die Werteverteilung veranschaulichenden, dreidimensionalen Profils zusammen mit einem Straßennetz mittels einer Anzeigeeinheit und/oder ein Bereitstellen der Werteverteilung für eine Streckenberechnung und/oder ein Durchführen einer Streckenberechnung unter Berücksichtigung der Werteverteilung. Wird einem Nutzer ein dreidimensionales Profil präsentiert, so kann die oben genannte Normalisierung von Werten den Effekt haben, dass die Darstellung überschaubarer ist. Wird das dreidimensionale Profil mit jeweils einem eigenen Layer für jede Datenquelle präsentiert, so kann es die Normalisierung einem Nutzer auch erleichtern, die Differenzen innerhalb der einzelnen Layer zu vergleichen. Auch die Präsentation als solche kann durch die Normalisierung vereinfacht werden, da so der maximale Absolutwert der Höhe der Layer vorgegeben werden kann. Beispielsweise könnte ein Layer für Verbrechen am Ort mit der höchsten Verbrechensrate auf einer Karte stets eine Höhe "1" aufweisen.

Die Aspekte, auf die sich die Daten aus den Datenquellen beziehen, können unterschiedlichster Art sein. Beispiele sind sicherheitsrelevante Aspekte, mobilitätsrelevante Aspekte, servicerelevante Aspekte, usw. Mögliche Aspekte umfassen - in einer nichtabschließenden Aufzählung - Staus, Unfälle, Verbrechen, Terroranschläge, Hochwasser, Überflutungen, Luftverschmutzungen, Brandgebiete, Erdbebengefahrengebiete, Bodenunebenheiten, Steigungen oder sonstige topographische Gegebenheiten, Einrichtungen wie Tankstellen, sowie Dienste mit flächiger Abdeckung, wie Funkabdeckung für Verkehrsfunk, DVB-T, Mobilfunk allgemein, Mobilfunk mit hohen Datenraten, etc.

In einer beispielhaften Ausführungsform umfassen die mindestens zwei Datenquellen eine Datenquelle, die Daten bereitstellt, aus denen sich Sätze von Koordinaten zu Orten mit Bezug auf mindestens einer Art von Ereignissen oder Vorkommnissen bestimmen lassen und/oder eine Datenquelle, die Daten bereitstellt, aus denen sich Sätze von Koordinaten zu Orten mit Bezug auf mindestens einer Art von örtlichen Gegebenheiten bestimmen lassen und/oder eine Datenquelle, die Daten bereitstellt, aus denen sich Sätze von Koordinaten zu Orten von mindestens einer Art von örtlichen Situationen bestimmen lassen und/oder eine Datenquelle, die Daten bereitstellt, aus denen sich Sätze von Koordinaten zu einer bestimmten Art von Einrichtung bestimmen lassen.

Die Datenquellen können beispielsweise Datenbanken oder Webdienste sein, und gespeicherte Informationen in einem beliebigen Datenformat zur Verfügung stellen.

Beliebige Merkmale der präsentierten Ausführungsformen können alleine oder in Kombination auch für die Aufbereitung von eingelesenen Daten, die aus einer einzigen Datenquelle stammen, eingesetzt werden.

Weitere vorteilhafte beispielhafte Ausgestaltungen der Erfindung sind der folgenden detaillierten Beschreibung einiger beispielhafter Ausführungsformen der vorliegenden Erfindung, insbesondere in Verbindung mit den Figuren, zu entnehmen. Die Figuren sollen jedoch nur dem Zwecke der Verdeutlichung, nicht aber zur Bestimmung des Schutzbereiches der Erfindung dienen. Die Figuren sind nicht maßstabsgetreu und sollen lediglich das allgemeine Konzept der vorliegenden Erfindung beispielhaft widerspiegeln. Insbesondere sollen Merkmale, die in den Figuren enthalten sind, keineswegs als zwingend notwendiger Bestandteil der vorliegenden Erfindung erachtet werden.

### Kurze Beschreibung der Zeichnungen

In den Figuren zeigt:
- Fig. 1: ein Blockdiagramm einer beispielhaften Ausführungsform einer erfindungsgemäßen Vorrichtung;
- Fig. 2: ein Blockdiagramm eines beispielhaften Systems mit einer Vorrichtung gemäß Figur 1;
- Fig. 3a: ein Ablaufdiagramme mit ersten Verfahrensschritten einer beispielhaften Ausführungsform des erfindungsgemäßen Verfahrens;
- Fig. 3b: ein Ablaufdiagramme mit zweiten Verfahrensschritten einer beispielhaften Ausführungsform des erfindungsgemäßen Verfahrens;
- Fig. 3c: ein Ablaufdiagramme mit dritten Verfahrensschritten einer beispielhaften Ausführungsform des erfindungsgemäßen Verfahrens;
- Fig. 3d: ein Ablaufdiagramme mit vierten Verfahrensschritten einer beispielhaften Ausführungsform des erfindungsgemäßen Verfahrens;
- Fig. 4a-d: eine schematische Darstellung einer Zusammenfassung von Flächen einer ersten Datenquelle;
- Fig. 5a-d: eine schematische Darstellung einer Zusammenfassung von Flächen einer zweiten Datenquelle;
- Fig. 6: eine schematische Darstellung einer zusammengefassten Flächen einer dritten Datenquelle;
- Fig. 7: eine schematische Darstellung einer beispielhaften Überlagerung der Flächen aus Figuren 4d und 5d; und
- Fig. 8: eine schematische Darstellung eines beispielhaften dreidimensionalen Höhenprofils für eine Ausgabe auf einem Bildschirm.

### Detaillierte Beschreibung einiger beispielhafter Ausführungsformen der Erfindung

Die vorliegende Erfindung wird im Folgenden anhand von beispielhaften Ausführungsformen beschrieben.

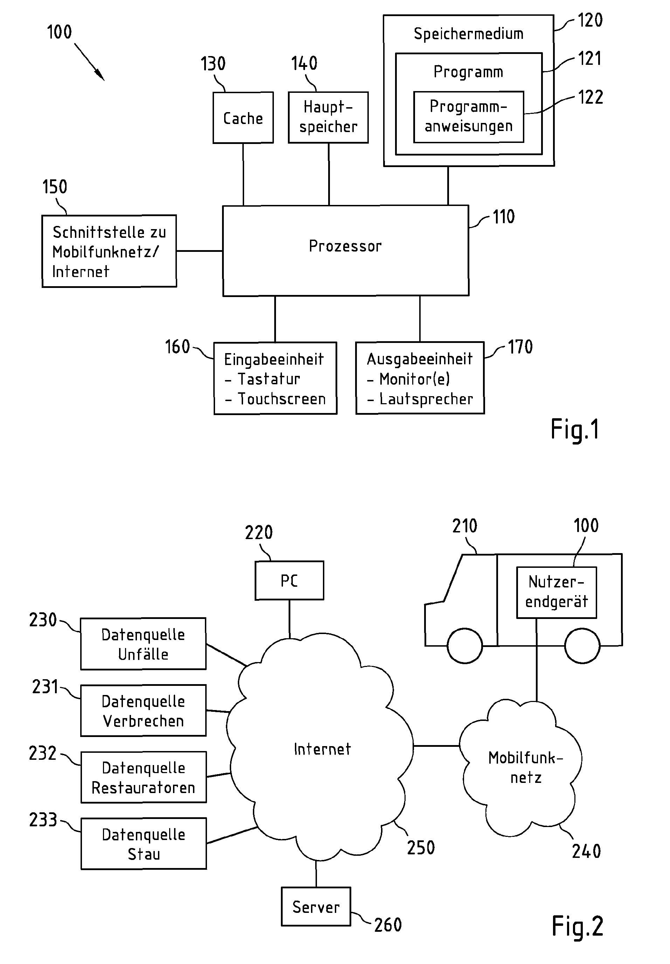

Figur 1 ist ein Blockdiagramm einer beispielhaften Ausführungsform einer erfindungsgemäßen Vorrichtung 100.

Die Vorrichtung 100 umfasst beispielhaft einen Prozessor 110 und, mit dem Prozessor 110 verbunden, ein Speichermedium 120. Das Speichermedium 120 speichert ein Programm 121 mit Programmanweisungen 122. Der Prozessor 110 ist dazu eingerichtet, um Programme aus dem Speichermedium 120 auszuführen und damit ein Gerät zu veranlassen, bestimmte Aktionen auszuführen. Die Programm 121 ist ein Programm zum Aufbereiten von Ortsangaben. Weitere Programme können zum Beispiel ein Programm zur Routenberechnung umfassen.

Optional umfasst die Vorrichtung 100 zusätzlich einen Puffer-Speicher (Cache) 130, einen Hauptspeicher 140, eine Schnittstelle 150, eine Eingabeeinheit 160 und/oder eine Ausgabeeinheit 170, wobei jede dieser Komponenten mit dem Prozessor 110 verbunden sein kann.

Der Hauptspeicher 140 kann beliebige Daten speichern, beispielsweise Kartenmaterial für eine Routenberechnung.

Die Schnittstelle 150 kann eine Schnittstelle zu einem Mobilfunknetz und/oder zum Internet und/oder zu einem lokalen Netzwerk sein, oder zu einer anderen Komponente, die eine Verbindung zu einem Mobilfunknetz und/oder zum Internet und/oder zu einem lokalen Netzwerk ermöglicht.

Die Eingabeeinheit 160 kann beispielsweise eine Tastatur, ein Touchscreen und/oder ein Mikrofon umfassen. Alternativ oder zusätzlich kann jegliches andere Mittel vorgesehen sein, um eine Eingabe durch einen Nutzer zu erfassen.

Die Ausgabeeinheit 170 kann beispielsweise einen Bildschirm und/oder einen Lautsprecher umfassen. Alternativ oder zusätzlich kann jegliches andere Mittel vorgesehen sein, um einem Benutzer Informationen zu präsentieren.

Die Vorrichtung 100 kann optional beliebige weitere Komponenten umfassen.

Die Vorrichtung 100 kann beispielsweise ein Nutzerendgerät, wie ein Navigationsgerät, ein Mobiltelefon oder ein Personal Computer (PC), oder ein Server sein. Die Vorrichtung 100 kann aber auch ein Modul für ein Nutzerendgerät oder einen Server sein.

Figur 2 ist ein Blockdiagramm eines beispielhaften Systems, das eine Vorrichtung 100 gemäß Figur 1 als eine Komponente umfassen kann.

In Figur 2 ist die Vorrichtung 100 beispielhaft ein Nutzerendgerät, das in einem Fahrzeug 210 integriert ist.

Alternativ könnte zum Beispiel der dargestellte PC 220 die Vorrichtung 100 als Modul umfassen.

Das System umfasst des Weiteren mehrere Datenquellen, insbesondere Datenquellen außerhalb von Vorrichtung 100. Beispielhaft sind eine Datenquelle 230 mit Ortsangaben zu Unfällen, eine Datenquelle 231 mit Ortsangaben zu Verbrechen, eine Datenquelle 232 mit Ortsangaben zu Restauratoren und eine Datenquelle 233 mit Ortsangaben zu Staus gezeigt. Das System kann alternativ oder zusätzlich beliebige andere Datenquellen umfassen. Jede der Datenquellen kann beispielsweise ein Speicher mit entsprechenden Daten sein, oder ein Server mit integriertem Speicher mit entsprechenden Daten oder ein Server mit Zugriff auf einen externen Speicher mit entsprechenden Daten.

Die Vorrichtung 100 kann über ein Mobilfunknetz 240 auf das Internet 250 und darüber wiederum auf jede der Datenquellen 230-233 zugreifen. In dem Fall umfasst die Schnittstelle 150 eine Mobilfunkeinheit oder einen Zugang zu einer anderweitig im Fahrzeug 210 vorhandenen Mobilfunkeinheit.

Umfasst der PC 220 eine Vorrichtung 100 gemäß Figur 1, so könnte der PC 220 auch direkt über das Internet 250 auf jede der Datenquellen 230-233 zugreifen.

Schließlich umfasst das System einen Server 260, der in bestimmten Ausführungsformen einen Teil der Funktionen der Vorrichtung 100 übernehmen kann.

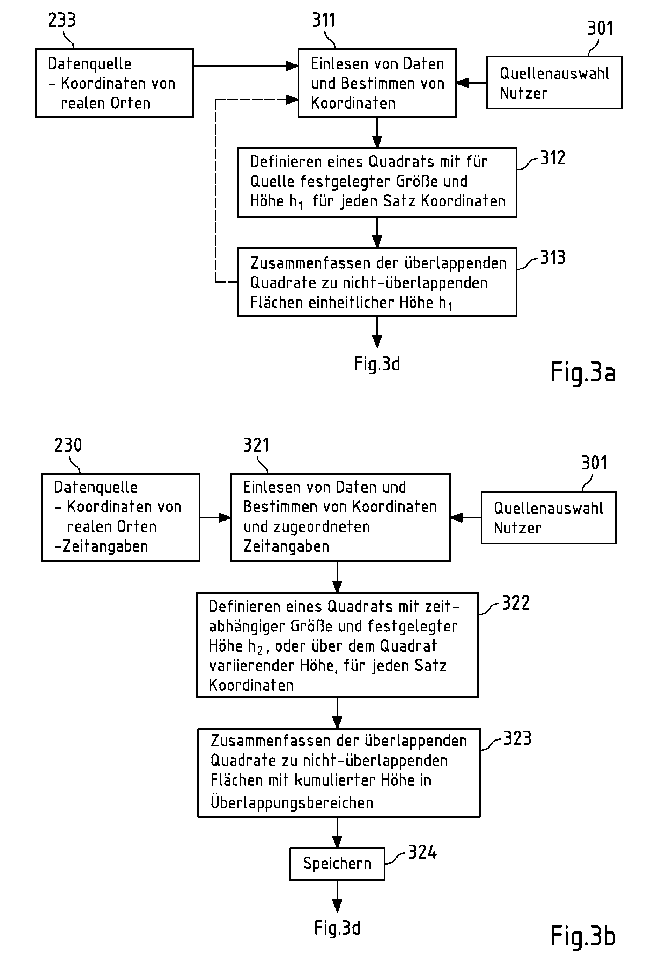

Figur 3a-3d illustriert eine Operation der Vorrichtung 100 gemäß einem beispielhaften Ausführungsbeispiel eines erfindungsgemäßen Verfahrens.

Wenn der Prozessor 110 das Programm 121 zum Aufbereiten von Ortsangaben ausführt, so wird der Nutzer zunächst über mögliche Datenquellen informiert und aufgefordert, eine beliebige Anzahl von Datenquellen auszuwählen (Aktion 301). Gleichzeitig oder zu einem späteren Zeitpunkt wird der Nutzer aufgefordert, eine Gewichtung der ausgewählten Quellen je nach aktueller Interessenlage vorzunehmen (Aktion 302). Für jede ausgewählte Datenquelle könnte beispielsweise ein Wert zwischen 0% für nicht relevante Daten und 100% für besonders relevante Daten ausgewählt werden.

Alternativ kann auch direkt eine Gewichtung für alle zur Verfügung stehende Datenquellen abgefragt werden. Alle Datenquellen, die mit einem Gewicht von größer 0% versehen wurden, könnten dann als ausgewählt gelten.

Die möglichen Datenquellen und die entsprechenden Zugriffsdaten können beispielsweise vorher von dem Nutzer hinterlegt worden sein. Diese Informationen können aber auch Teil des Programms 121 sein, oder von einem Server angeboten werden, der einen Zugriff auf die Datenquellen koordiniert.

Für jede der ausgewählten Datenquellen veranlasst der Prozessor 110 dann ein Einlesen von Daten über die Schnittstelle 150. Anhand der eingelesenen Daten jeder der Datenquellen lassen sich Sätze von Koordinaten von für einen jeweiligen Aspekt relevanten realen Orten bestimmen. Es können alle von der jeweiligen Datenquelle bereitgestellten Daten sein oder aber eine eingeschränkte Auswahl der Daten, z.B. Daten für ein bestimmtes Gebiet und/oder nur ortsbezogene Daten, falls die Datenquelle noch weitere Daten bereitstellt. Ein Satz Koordinaten kann beispielsweise die geographische Länge und die geographische Breite eines Ortes umfassen. Wenn die eingelesenen Daten bereits Koordinaten umfassen, brauchen diese nur extrahiert und gegebenenfalls passend formatiert zu werden. Die Koordinaten können aber auch aus anderen Informationen in den eingelesenen Daten abgeleiteten werden, zum Beispiel aus Anschriften oder Adressen bestimmter realer Orte, oder aus einer vektoriellen Beschreibung eines realen Gebietsabschnitts.

Die Verarbeitung der eingelesenen Daten durch Prozessor 110 kann für verschiedene Typen von Datenquellen voneinander abweichen. Programmanweisungen 122 könnten hierzu verschiedene Teilanweisungen aufweisen, die beispielsweise je nach Datenquelle anhand eines Parameters ausgewählt werden. Dabei können für jede Datenquelle eigene Teilanweisungen implementiert werden, oder es können Teilanweisungen implementiert werden, die für verschiedene Datenquellen des gleichen Typs genutzt werden können. Drei beispielhafte Alternativen für die Verarbeitung sind in den Ablaufdiagrammen von Figuren 3a-3b dargestellt.

Figur 3a illustriert eine mögliche Verarbeitung von Daten von einer Datenquelle 233, die Stauinformationen bereitstellt. Eine ähnliche Verarbeitung kommt auch für verschiedene andere Datenquellen in Betracht, wie zum Beispiel eine Datenquelle, die von Hochwasser betroffene Orte angibt.

Aus den eingelesenen Daten der Datenquelle 233 werden Sätze von Koordinaten für verschiedene reale Orte bestimmt (Aktion 311). Die Daten können von vornherein solche Koordinaten beinhalten, so dass diese lediglich extrahiert werden müssen. Ist beispielsweise auf einem Straßenabschnitt ein Stau, so kann dieser Stau mittels einer Serie von Sätzen von Koordinaten widergespiegelt werden, die Orte in gleichmäßigen Abständen auf dem Straßenabschnitt definieren. Alternativ könnte eine solche Serie von Sätzen von Koordinaten aus den Daten berechnet werden, wenn die Daten einen Straßenabschnitt mit Stau in einer anderen Weise angeben, etwa mittels der Endpunkte einer oder mehrerer Geraden.

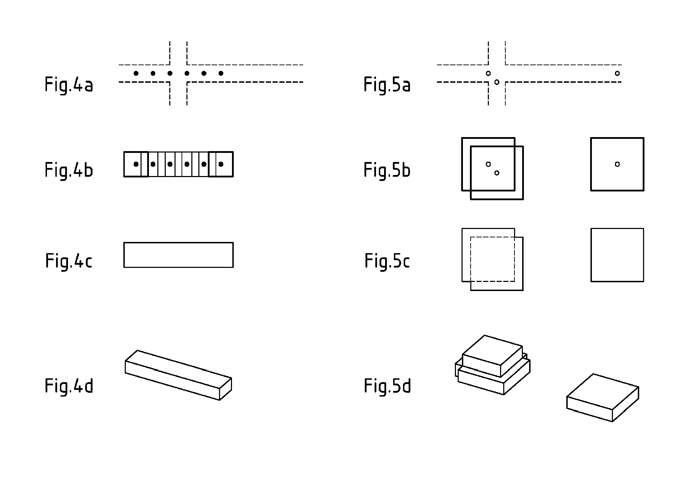

Figur 4a veranschaulicht sehr vereinfacht mittels einer Reihe von Punkten eine Reihe von Orten, definiert durch einen jeweiligen Satz von Koordinaten, die einen Stau auf einem Straßenabschnitt repräsentieren. Gestrichelten Linien zeigen einen Straßenverlauf mit Kreuzung lediglich zum besseren Verständnis. Die eingelesenen Daten enthalten keine Information zu den Straßen an sich.

Für jeden Satz Koordinaten von einem realen Ort wird dann eine Fläche definiert (Aktion 312). Die Fläche ist beispielhaft ein Quadrat mit dem durch den Satz Koordinaten angegebenen Ort als Zentrum. Ein Quadrat kann durch seine vier Ecken definiert werden. Die Größe des Quadrats kann für die Datenquelle festgelegt sein. Die Größe kann beispielsweise so gewählt sein, dass die Quadrate für eine jeweilige Serie von Koordinatensätzen überlappen. Das heißt, einem größeren gewählten Abstand zwischen den durch die Koordinaten angegebenen Orten, die einen Stau auf einem Straßenabschnitt repräsentieren, könnte mit größeren Quadraten Rechnung getragen werden. Den Quadraten wird ferner als ein Wert eine vorgegebene Höhe h₁ zugewiesen.

Figur 4b veranschaulicht sehr vereinfacht das Zuweisen von Quadraten als beispielhafte Flächen zu jedem in Figur 4a repräsentierten Satz Koordinaten. Die Quadrate sind überlappend. Das erste und das letzte Quadrat sind zum besseren Verständnis mit stärkeren Linien gezeichnet.

Anschließend werden alle überlappenden Flächen zusammengefasst, so dass man eine oder mehrere nicht-überlappenden Flächen erhält (Aktion 313). Die zusammengefassten Flächen haben durchgehend die gleiche Höhe h₁, wie die einzelnen Quadrate.

Figur 4c veranschaulicht sehr vereinfacht eine Draufsicht auf die nicht-überlappende Fläche, die sich mit dem Schritt des Zusammenfassens aus den Quadraten in Figur 4b ergibt. Für den kleinen dargestellten Ausschnitt existiert lediglich eine einzige nicht-überlappende Fläche. Es versteht sich, dass Staus auf anderen Straßenabschnitten in ähnlichen nicht überlappenden Flächen resultieren. Es versteht sich ferner, dass sich eine nicht-überlappende Fläche in Rechteckform nur dann ergibt, wenn der Stau genau in Nord-Süd Richtung oder genau in West-Ost Richtung, wie in Figur 4a angenommen, verläuft.

Figur 4d veranschaulicht sehr vereinfacht eine perspektivische Sicht auf die zusammengefasste Fläche, aus der sich auch die der zusammengefassten Fläche zugeordnete einheitliche Höhe ersichtlich ist.

Da sich Staudaten ständig ändern, könnten die Aktionen 311-313 automatisch in regelmäßigen, kurzen Abständen, beispielsweise alle 10 Minuten, oder auf jeweilige Nutzeranforderung wiederholt werden.

Figur 3b illustriert eine mögliche Verarbeitung von Daten von einer Datenquelle 230, die Ortsangaben zu Unfällen bereitstellt. Eine ähnliche Verarbeitung kommt auch für verschiedene andere Datenquellen in Betracht, wie zum Beispiel eine Datenquelle 231, die Orte von Verbrechen liefert.

Aus den eingelesenen Daten der Datenquelle 230 werden die Koordinaten von verschiedenen realen Orten bestimmt (Aktion 321). Die Daten können einen Satz Koordinaten für jeden registrierten Unfall in einem abgedeckten Gebiet beinhalten. Zusätzlich kann jedem Satz Koordinaten in den eingelesenen Daten eine Zeitangabe zugeordnet sein, die angibt, wann der Unfall stattgefunden hat.

Figur 5a veranschaulicht sehr vereinfacht mittels drei Punkten drei Orte, definiert durch einen jeweiligen Satz von Koordinaten, an denen ein Unfall stattgefunden hat. Die gestrichelten Linien zeigen einen Straßenverlauf mit Kreuzung zum besseren Verständnis. Der Straßenverlauf entspricht dabei dem Verlauf in Figur 4a. Die eingelesenen Daten enthalten wiederum keine Informationen zu Straßen an sich. Zwei Punkte befinden sich nahe beieinander an der Kreuzung, der dritte Punkt befindet sich in einiger Entfernung.

Für jeden Satz Koordinaten von einem realen Ort wird dann eine Fläche mit festgelegter Höhe h₂ als zugeordnetem Wert definiert (Aktion 322). Die Fläche ist wiederum beispielhaft ein Quadrat mit dem durch den Satz Koordinaten angegebenen Ort als Zentrum. Die Größe des Quadrats kann für die Datenquelle festgelegt sein, zum Beispiel auf eine Kantenlänge von 250 Metern. Zusätzlich kann vorgesehen werden, dass die Größe des Quadrats abnimmt, je länger der einem Satz Koordinaten zugewiesene Zeitpunkt zurückliegt. Alternativ oder zusätzlich könnten Sätze von Koordinaten mit einem zugewiesenen Zeitpunkt, der länger zurückliegt als eine vorgegebene Zeit, bei der Verarbeitung nicht berücksichtigt werden. Alternativ zu der Zuweisung einer einheitlichen Höhe h₂ zu einer gesamten Fläche könnte auch eine über die Fläche variierende Höhe verwendet werden. So könnte eine Höhe h₂ nur die maximale, dem Zentrum der Fläche zugewiesene Höhe sein, wobei das Zentrum durch den zugehörigen Satz Koordinaten bestimmt sein kann. Diese Maximalhöhe könnte dann zu den Rändern der Fläche hin abnehmen.

Figur 5b veranschaulicht sehr vereinfacht das Zuweisen von Quadraten als beispielhafte Flächen zu jedem in Figur 5a repräsentierten Satz Koordinaten. Die beiden Quadrate, die auf den Koordinaten für die beiden nahe beieinander liegenden Orten beruhen, sind überlappend. Das dritte Quadrat, das auf den Koordinaten für den dritten separaten Ort beruht, ist nicht überlappend mit anderen Quadraten.

Anschließend werden alle überlappenden Flächen zusammengefasst, so dass man eine oder mehrere nicht-überlappende Flächen erhält (Aktion 323). Die zusammengefassten Flächen haben in den vormals überlappenden Bereichen eine kumulierte Höhe der ursprünglichen Flächen. Das heißt, in Bereichen, in denen sich zwei Quadrate überlappen ergibt sich die doppelte Höhe 2h₂ der ursprünglichen Quadrate; in Bereichen, in denen sich drei Quadrate überlappen ergibt sich die dreifache Höhe 3h₂ der ursprünglichen Quadrate, etc. Sind den ursprünglichen Flächen über die Flächen variierende Höhen zugeordnet, so erfolgt eine entsprechende Aufsummierung der Werte an jeder Position in den überlappenden Bereichen. Es versteht sich, dass es beispielsweise auch möglich wäre einen Maximalwert für die kumulierte Höhe vorzusehen.

Figur 5c veranschaulicht sehr vereinfacht eine Draufsicht auf nicht-überlappende Flächen, die sich mit dem Schritt des Zusammenfassens aus den Quadraten in Figur 5b ergeben. Für den kleinen dargestellten Ausschnitt existieren zwei nicht überlappende Flächen, von denen die linke auf zwei zusammengefassten, überlappenden Flächen basiert. Hier zeigt die durchgezogene Linie den Umriss der Basis mit einer ersten Höhe h₂ und die gestrichelte Linie ein Rechteck mit Höhe 2h₂. Die rechte nicht-überlappende Fläche entspricht dem ursprünglichen dritten Quadrat mit Höhe h₂. Es versteht sich, dass Unfälle auf anderen Straßenabschnitten in ähnlichen nicht überlappenden Flächen resultieren. Figur 5d veranschaulicht sehr vereinfacht eine perspektivische Ansicht auf die zusammengefassten Flächen.

Aus Figuren 5c und 5d ist ersichtlich, dass die Grundfläche des niedrigeren Teils einer zusammengefassten Fläche aus zwei Quadraten mit acht Sätzen von Koordinaten definiert werden kann, nämlich mit einem Satz für jede Ecke. Für die Definition der Grundfläche des höheren Teils der zusammengefassten Flächen sind lediglich zwei zusätzliche Sätze von Koordinaten erforderlich, da zwei Ecken mit denen des niedrigeren Teils übereinstimmen.

Schließlich wird eine Definition der resultierenden nicht-überlappenden Flächen im Hauptspeicher 140 oder in einem anderen Langzeitspeicher und gegebenenfalls auch direkt im Cache 130 gespeichert. (Aktion 324).

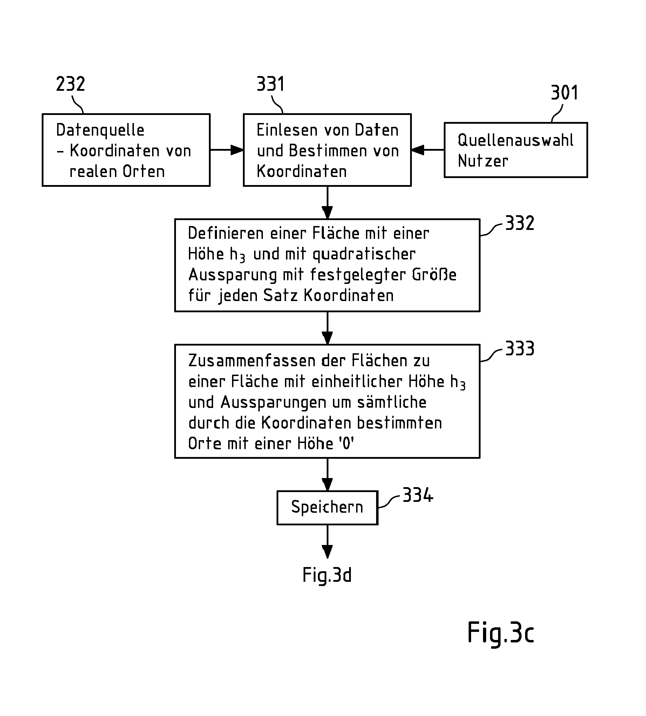

Figur 3c illustriert eine mögliche Verarbeitung von Daten von einer Datenquelle 232, die Ortsangaben für Werkstätten von Restauratoren liefert. Alternativ könnte sie Ortsangaben für jegliche andere Art von Einrichtung liefern, insbesondere für solche Einrichtungen, die auf einer Route stets innerhalb einer bestimmten Zeit oder innerhalb eines bestimmten Umkreises erreichbar sein soll, beispielsweise Ortsangaben für andere Arten von Werkstätten oder für Tankstellen.

Aus den eingelesenen Daten der Datenquelle 232 werden die Koordinaten der Werkstätten bestimmt (Aktion 331).

Für jeden Satz Koordinaten zu einer Werkstatt wird dann eine Fläche mit einer Aussparung definiert (Aktion 332). Die Aussparung ist beispielhaft ein Quadrat mit dem durch die Koordinaten angegebenen Ort als Zentrum. Die Größe des Quadrats kann festgelegt sein und ein Gebiet abstecken, in dem normalerweise der Ort im Zentrum innerhalb einer bestimmten Zeit erreicht werden müsste. Die die Aussparung umgebende Fläche hat beispielsweise eine vorgegebene Höhe h₃ als zugeordneten Wert. In einer Variante wäre es auch möglich, die Höhe der Fläche nicht einheitlich zu gestalten. Sie könnte beispielsweise allgemein die Höhe h₃ aufweisen, aber innerhalb einer gewissen Entfernung zu der Aussparung oder zum Zentrum der Aussparung beginnen, auf 'Null' abzusinken. Die Reduktion der Höhe könnte beispielsweise linear oder quadratisch erfolgen. Nicht-konstante Höhen für eine definierte Fläche kommen generell eher für Datenquellen in Betracht, die wenige Datensätze liefern, da in diesen Fällen der zusätzliche Rechenaufwand überschaubar bleiben mag.

Anschließend werden alle Flächen mit jeweils einer Aussparung so zusammengefasst, dass man eine Fläche mit mehreren Aussparungen oder einer großen Aussparung erhält, die das gesamte Gebiet aller einzelnen Aussparungen abdecken (Aktion 333). Die zusammengefasste Fläche kann zum Beispiel durchgehend die gleiche Höhe h₃ wie die einzelnen Flächen haben, und die Aussparungen können zum Beispiel durchgehend eine Höhe von 'Null' haben. Für die Variante mit variabler Höhe kann stattdessen für jede Stelle die minimale Höhe, die sich für die verschiedenen Sätze von Koordinaten an dieser Stelle ergeben, verwendet werden.

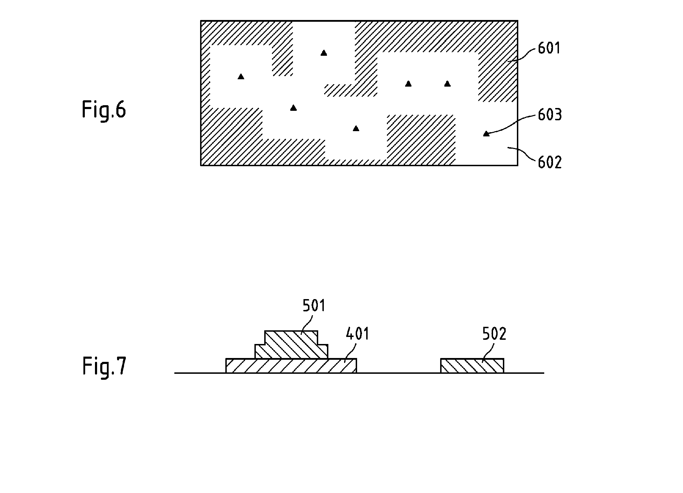

Figur 6 veranschaulicht in stark vereinfachter Weise eine Draufsicht auf eine resultierende zusammengefasste nicht-überlappende Fläche 601 mit einheitlicher Höhe h₃ und mit Aussparungen 602 für alle Werkstätten. Die Position der Werkstätten ist jeweils mit einem Dreieck 603 markiert.

Schließlich wird eine Definition der resultierenden nicht-überlappenden Flächen im Hauptspeicher 140 oder in einem anderen Langzeitspeicher und gegebenenfalls auch im Cache 130 gespeichert. (Aktion 334). Da bereitgestellte Daten zu Unfällen, Verbrechen, Einrichtungen und ähnlichem generell relativ statisch sind, können die gespeicherten Daten mehrfach verwendet werden. Aufgrund der großen Datenmenge kann dadurch der Rechenaufwand erheblich reduziert werden.

Während Figuren 3a-c drei mögliche Verarbeitungsvarianten für drei verschiedene Arten von Daten illustrieren, versteht es sich, dass andere Verarbeitungsvarianten für die gleichen oder andere Arten von Daten ebenso möglich sind. Ferner mag eine Vorrichtung bzw. ein enthaltenes Programm nur eine Verarbeitungsvariante unterstützen.

Des Weiteren ist es möglich, dass das Nutzerendgerät 100 eine eigene Datenquelle bereitstellt oder die eingelesenen Daten anhand eigener Daten ergänzt. Wenn beispielsweise ein Fuhrpark mehrere Fahrzeuge mit Telematikfunktionen in Betrieb hat und festgestellt wird, dass zwei der Fahrzeuge auf der gleichen Autobahn sich nicht auf einem Parkplatz befinden und sich dennoch nicht bewegen oder langsam anfahren und bremsen, so könnten anhand dieser Informationen eigene Staudaten erzeugen werden. Diese können dann in das System einfließen, indem sie als weitere Datenquelle genutzt werden. Andere Echtzeitbewegungsdaten können in ähnlicher Weise genutzt werden. Wenn weiter beispielsweise bekannt ist, dass ein neuer Restaurator vor kurzem seine Werkstatt eröffnet hat, die von der Datenquelle 232 aufgrund einer relativ seltenen Aktualisierung dieser Datenquelle noch nicht berücksichtigt wird, so könnten die entsprechenden Koordinaten vom Nutzer von Hand eingegeben werden, um die eingelesenen Daten aus der Datenquelle 232 zu ergänzen, bevor sie verarbeitet werden.

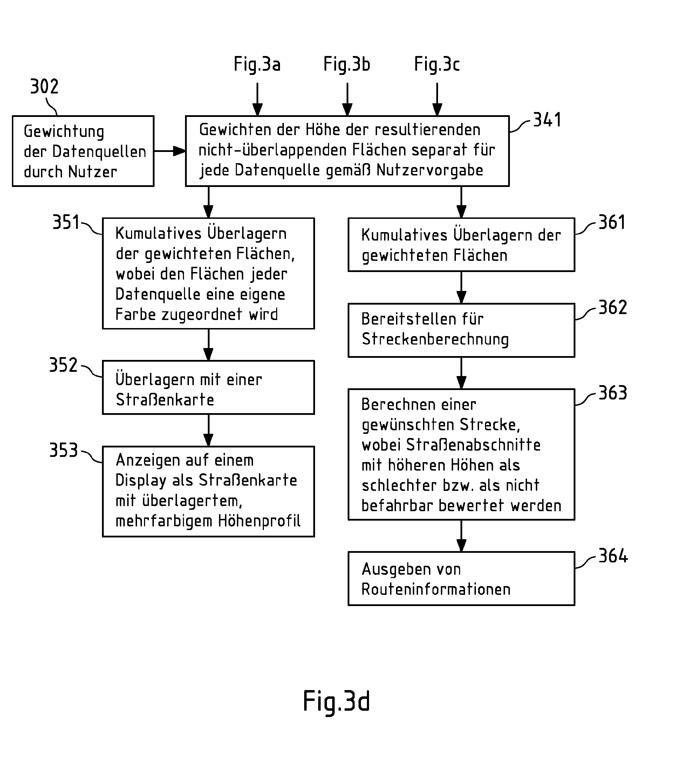

Figur 3d illustriert nun eine beispielhafte sich anschließende Verarbeitung der Resultate der in Figuren 3a-3c illustrierten Verarbeitung. Dabei werden die gemäß Figur 3a aufbereiteten Daten unmittelbar weiter verarbeitet, während die gemäß Figur 3b und 3c aufbereiteten Daten aus dem Hauptspeicher 140 ausgelesen werden, in dem sie gerade erst oder aber auch schon vor einiger Zeit hinterlegt worden sein können. Sind die Daten im Cache 130 vorhanden sind, so können sie auch direkt hieraus ausgelesen werden. Es versteht sich, dass sowohl die gemäß Figur 3a aufbereiteten Daten als auch die gemäß Figur 3b und 3c aufbereiteten Daten für die Verarbeitung gemäß Figur 3d in einem Arbeitsspeicher oder einem anderen Speicher zwischengespeichert werden können.

Zunächst wird, weiter separat für jede Datenquelle, eine Gewichtung der Höhe der nicht-überlappenden Flächen vorgenommen (Aktion 341). Die Gewichtung erfolgt dabei gemäß der Nutzervorgabe für jede Datenquelle.

Für die weitere Verarbeitung werden zwei beispielhafte Alternativen präsentiert.

Für die erste Alternative werden die gewichteten Flächen für die verschiedenen Datenquellen kumulativ überlagert (Aktion 351). Das heißt, wenn an einer Stelle eine gewichtete Fläche einer ersten Datenquelle die Höhe 'a*h₁' hat, die gewichtete Fläche einer zweiten Datenquelle an dieser Stelle die Höhe '2*b*h₂ hat, und die gewichteten Flächen einer dritten Datenquelle an der Stelle eine Lücke aufweisen, so ist die Gesamthöhe an dieser Stelle 'a*h₁+2*b*h₂'. Insgesamt ergibt sich also durch die Überlagerung eine Werteverteilung in Form eines dreidimensionalen Höhenprofils, das eine Gesamtsituation in Hinblick auf mindestens zwei Aspekte in einem realen Gebiet widerspiegelt.

Jeder Datenquelle kann für die Überlagerung eine eigene Farbe oder ein eigenes Muster zugewiesen werden. Dadurch ist in dem sich ergebenden dreidimensionalen Profil weiter ersichtlich, auf welche Datenquelle die einzelnen Erhebungen zurückgehen.

Figur 7 zeigt stark vereinfacht einen Schnitt durch ein Höhenprofil entlang der in Figuren 4a und 5a angedeuteten Straße, das sich bei Überlagerung der nicht-überlappenden Flächen aus Figur 4d und Figur 5d ergibt. Element 401 mit einer ersten Schraffur entspricht dabei der Fläche mit zugeordneter Höhe aus Figur 4d, und Elemente 501 und 502 mit einer zweiten Schraffur entsprechen den Flächen mit zugeordneten Höhen aus Figur 5d.

Das sich ergebende dreidimensionale Profil kann dann einer Straßenkarte überlagert werden (Aktion 352). Die Daten für die Straßenkarte kann der Prozessor 110 beispielsweise aus dem Hauptspeicher 140 laden.

Schließlich kann der Prozessor 110 veranlassen, dass die so aufbereiteten Daten auf einem Monitor 170 präsentiert werden.

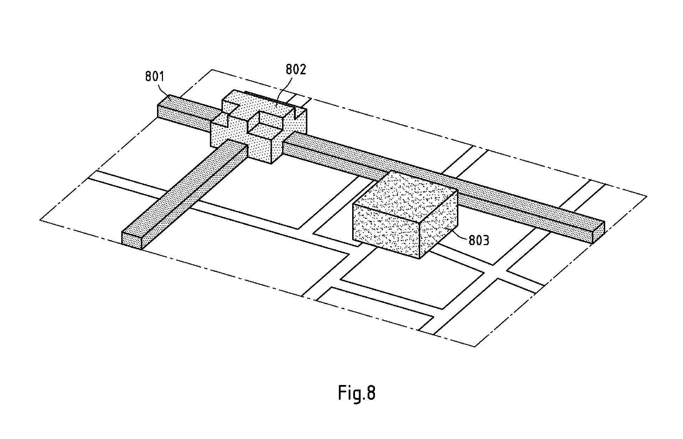

Figur 8 veranschaulicht stark vereinfacht einen kleinen Ausschnitt aus einer solchen Präsentation. Eine Straßenkarte wird in einer Ebene mit Höhe 'Null' dargestellt. In einem überlagerten Höhenprofil zeigt ein erstes Muster 801 Staubereiche, ein zweites Muster 802 einen unfallträchtigen Bereich und ein drittes Muster 803 einen verbrechensgefährdeten Bereich an. Die Staubereiche haben dabei eine relativ geringe Höhe, da der Nutzer den Staudaten eine relative kleine Gewichtung zugewiesen hat. Der unfallträchtige Bereich hat eine mittlere Höhe, da zum einen eine mittlere Anzahl von Unfällen auf einer betroffenen Kreuzung registriert wurden und da der Nutzer zum anderen den Unfalldaten eine mittlere Gewichtung zugewiesen hat. Die Höhe des unfallträchtigen Bereichs überlagert sich jedoch teilweise der Höhe aufgrund des Staus im Bereich der betroffenen Kreuzung zu einer relativ hohen Gesamthöhe. Der verbrechensgefährdete Bereich hat eine relativ hohe Höhe aufgrund einer Vielzahl von registrierten Verbrechen in seinem Zentrum sowie aufgrund einer hohen Gewichtung von Verbrechensdaten durch den Nutzer.

Ein Nutzer kann anhand der anschaulichen Darstellung nun manuell eine Route so planen, dass sie stets auf möglichst niedrigem Niveau durch die Täler in dem drei-dimensionalen "Gebirge" verläuft.

Bei der ersten Alternative in Figur 3d können die Aktionen aus Figur 3a und die Aktionen 341, 351, 352 und 353 immer dann wiederholt werden, wenn der Nutzer eine Aktualisierung anfordert. Hierzu müssen die Aktionen aus Figuren 3b und 3c nicht erneut durchgeführt werden. Für die Unfall- und/oder Verbrechensdaten und für die Restauratorendaten können die zuvor im Cache 130 gespeicherten Daten mehrfach wiederverwendet werden, zum Beispiel solange bis das Programm neu gestartet wird.

Für die zweite Alternative werden die gewichteten Flächen für die verschiedenen Datenquellen ebenfalls kumulativ überlagert, um ein dreidimensionales Höhenprofil zu erhalten (Aktion 361).

Das Zuweisen einer eigenen Farbe oder eines eigenen Musters zu den Erhebungen basierend auf verschiedenen Datenquellen ist in diesem Fall nur erforderlich, wenn die zweite Alternative mit der ersten Alternative in Kombination genutzt werden soll.

Das Resultat aus Aktion 361 wird für eine automatische Streckenberechnung zur Verfügung gestellt (Aktion 362).

Der Prozessor 110 kann nun eine Routenberechnung durchführen, indem er Programmanweisungen für eine Routenberechnung ausführt (Aktion 363). Die Programmanweisungen für eine Routenberechnung können in Programm 121 integriert sein, oder sie können in einem eigenständigen Programm in Speichermedium 120 vorgehalten werden können.

Die Routenberechnung basiert auf in Hauptspeicher 140 gespeicherten Straßendaten. Zusätzlich zu einer konventionellen Berechnung zum Beispiel der kürzesten oder schnellsten Route berücksichtigt die Routenberechnung das dreidimensionale Höhenprofil. Insbesondere können Straßenabschnitte mit hohen Höhen des dreidimensionalen Profils als schlechter bewertet werden als Straßenabschnitte mit niedrigeren Höhen. Ab einer vorgegebenen Höhe können Straßenabschnitte auch als nicht begehbar oder befahrbar gelten. So kann zum Beispiel die Höhe h₃ für die mit Bezug auf Figur 3c beschriebenen Aktionen so definiert werden, dass ausschließlich Routen berechnet werden, die sich durchgehend durch ein durch die Aussparungen definiertes Tal bewegen. Dies kann entschärft werden, indem der Benutzer bei der Gewichtung den Einfluss der Datenquelle 232 ausreichend reduziert. Generell kann so zum Beispiel die sicherste Route bestimmt werden, wenn die Datenquellen von dem Nutzer entsprechend ausgewählt und gewichtet wurden.

Es kann auch vorgesehen werden, dass der Nutzer einen individuellen Grenzwert für die Höhe für jeden Aspekt und/oder einen Grenzwert für die aggregierte Höhe für alle Aspekte festlegen kann, der auf einer Route dann nicht überschritten werden darf.

Prozessor 110 veranlasst dann eine Ausgabe der Routeninformationen über die Ausgabeeinheit 170 (Aktion 364). Die Ausgabe kann in einer beliebigen Weise optisch und/oder akustisch erfolgen.

Ein mögliches Resultat der Routenberechnung kann auch sein, dass eine Route mit den vorgegebenen Kriterien nicht vorhanden ist. Wenn eines der Kriterien nicht essentiell war, kann der Nutzer dann eine Neuberechnung mit einer geänderten Gewichtung der Datenquellen durchführen lassen.

Bei der zweiten Alternative in Figur 3d können die Aktionen 341, 361, 362, 363 und 364 außerdem immer dann wiederholt werden, wenn die Aktionen aus Figur 3a neue Resultate für die Staudaten liefern. Als Unfall- und/oder Verbrechensdaten und als Restauratorendaten können wiederum die zuvor im Cache 130 gespeicherten Daten erneut verwenden werden.

Es versteht sich, dass die erste und die zweite Alternative auch kombiniert werden können. Prozessor 110 kann also eine automatische Routenberechnung unter Berücksichtigung des dreidimensionalen Profils durchführen, und die errechnete Strecke kann dann einem Nutzer beispielsweise auf einer mit dem dreidimensionalen Profil überlagerten Straßenkarte dargestellt werden.

Zusätzlich zu den mit Bezug auf Figuren 3a-3d beschriebenen Aktionen könnte auch mindestens eine Normalisierung von Daten durchgeführt werden. Zum einen könnten die aus bestimmten Datenquellen eingelesenen Daten direkt nach dem Einlesen normalisiert werden. Wenn zum Beispiel die eingelesenen Daten selber einen Hinweis auf die den Flächen zuzuweisenden Höhen oder anderen Werte liefern, so können die Daten derart normalisiert werden, dass die Werte in einem passenden Verhältnis zu den Werten für andere Datenquellen stehen. Generell können die Daten aus unterschiedlichen Datenquellen durch eine Normalisierung auch in eine einheitliche Struktur gebracht werden. In einigen Ausführungsformen kann vorgesehen werden, dass Daten hierbei auch qualitativ nachgebessert werden können, etwa durch die Kombination von Daten oder das Aufteilen von Daten, durch ein Anreichern mit anderen Daten, usw. Alternativ oder zusätzlich könnten die Flächen und/oder die den Flächen zugeordneten oder zuzuordnenden Werte normalisiert werden. Hiermit kann zum Beispiel bei einer großen Anzahl an berücksichtigten Datenquellen sichergestellt werden, dass die Übersichtlichkeit gewahrt bleibt, indem kleinere Flächen und/oder Werte genutzt werden als bei einer kleinen Anzahl an berücksichtigten Datenquellen.

Es versteht sich, dass Vorrichtung 100 auch die Möglichkeit unterstützt, dass ein Nutzer in Aktion 301 nur eine einzige Datenquelle auswählt. In dem Fall kann die kumulative Überlagerung in Aktion 351 bzw. Aktion 361 entfallen. Eine Gewichtung der Daten gemäß Aktion 302 ist in dem Fall auch nicht unbedingt erforderlich. Auch mit einer einzigen Datenquelle kann sich bereits ein anschauliches Höhenprofil mit mehrstufigen Höhen ergeben, wenn sich aus dem Zusammenfassen der überlappenden Flächen neue Höhen ergeben, wie etwa in Aktion 323 aus Figur 3b, oder wenn bereits den definierten Flächen verschiedene und/oder über eine Fläche nicht konstante Höhen zugeordnet werden, die sich aus Zusatzinformationen in den eingelesenen Daten ergeben.

Es versteht sich ferner, dass die präsentierten Aktionen nicht unbedingt alle von Prozessor 110 in Vorrichtung 100 veranlasst werden brauchen.

Beispielsweise könnte ein Teil der Aktionen, etwa die Aktionen in Figuren 3a-3c, vom Server 260 durchgeführt werden. Hieraus können sich mehrere Vorteile ergeben. Ein Teil der rechenintensiven Operationen könnte dann einmalig für eine Vielzahl von Nutzern durchgeführt werden. In einer jeweiligen Nutzervorrichtung 100 könnte nur noch die individuelle, auf Nutzervorgaben basierende Verarbeitung gemäß den mit Verweis auf Figur 3d beschriebenen Aktionen erfolgen. Außerdem kann auf einem Server 260 der Zugriff auf eine wachsende Anzahl von zur Verfügung stehenden Datenquellen zentral für eine Vielzahl von Nutzern ermöglicht werden. Weiter alternativ könnten bis auf die Ausgabe von Informationen mittels der Ausgabeeinheit 170 alle mit Bezug auf Figuren 3a-3d beschriebenen Aktionen im Server 260 ausgeführt werden. Hiermit kann die für die Erfindung erforderliche Rechenleistung in einem Nutzergerät reduziert werden.

In einer anderen Ausführungsform könnten alle mit Bezug auf Figuren 3a-3d beschriebenen Aktionen auf dem PC 220 durchgeführt werden, sei es für eine manuelle Routenplanung, sei es für eine Routeberechnung als Vorabinformation vor einer Fahrt. Des Weiteren könnte ein solcher PC 220 oder ein firmeneigener Server in einem Fuhrpark dazu genutzt werden, die Daten für eine Vielzahl von Fahrzeugen des Fuhrparks in Ressourcen schonender Weise zu verarbeiten. Fertig berechnete Routen oder Zwischenergebnisse könnten dann jedem Fahrzeug zur Verwendung übermittelt werden, etwa über ein lokales Funknetz (Wireless Local Area Network WLAN).

Die dargestellten oder beschriebenen Verbindungen zwischen Komponenten sind als funktionale Verbindungen zu verstehen. Sie können direkt oder indirekt über mehrere andere Komponenten realisiert werden. Die Abfolge der geschilderten Aktionen in den einzelnen Ablaufdiagrammen ist nicht zwingend; alternative Abfolgen der Verfahrensschritte sind denkbar. Die Aktionen können auf verschiedene Art und Weise implementiert werden; so ist eine Implementierung nicht nur in Software (durch Programmanweisungen), sondern auch nur in Hardware oder in einer Kombination von beidem denkbar.

Es versteht sich, dass die beschriebenen Ausführungsformen lediglich Beispiele sind, die im Rahmen der Ansprüche auf vielfältige Weise modifiziert und/oder ergänzt werden können. Insbesondere kann jedes Merkmal, das für ein bestimmtes Ausführungsbeispiel beschrieben wurde, eigenständig oder in Kombination mit anderen Merkmalen in einem beliebigen anderen Ausführungsbeispiel genutzt werden. Jedes Merkmal, dass für ein Ausführungsbeispiel einer bestimmten Kategorie beschrieben wurde, kann auch in entsprechender Weise in einem Ausführungsbeispiel einer anderen Kategorie eingesetzt werden.

## Patentansprüche

1. Verfahren ausgeführt von zumindest einer Vorrichtung (100), das Verfahren umfassend:
- Einlesen von Daten aus mindestens zwei Datenquellen (230, 231, 232, 233), wobei sich anhand der Daten jeder der mindestens zwei Datenquellen Sätze von Koordinaten von für einen jeweiligen Aspekt relevanten realen Orten bestimmen lassen;
- Definieren einer jeweiligen Fläche basierend auf jeweils einem Satz Koordinaten für jeden der realen Orte für jede der mindestens zwei Datenquellen und Bestimmen mindestens eines der jeweiligen Fläche zugeordneten Werts;
- Zusammenfassen von für eine jeweilige Datenquelle definierten überlappenden Flächen zum Erhalten von nicht-überlappenden Flächen mit mindestens einem zugeordneten Wert für jede der mindestens zwei Datenquellen; und
- Überlagern der auf den Daten aus den mindestens zwei Datenquellen basierenden nicht-überlappenden Flächen mit den zugeordneten Werten zum Erhalten einer Werteverteilung, die eine Gesamtsituation in Hinblick auf die mindestens zwei Aspekte in einem realen Gebiet widerspiegelt.

2. Verfahren gemäß Anspruch 1, wobei die für einen jeweiligen Satz Koordinaten definierte Fläche für mindestens eine der Datenquellen (230, 231, 233) ein Quadrat, ein Kreis oder ein Polygon ist.

3. Verfahren gemäß Anspruch 1 oder 2, wobei die Größe und/oder der mindestens eine Wert der für einen jeweiligen Satz Koordinaten definierten Fläche für mindestens eine der Datenquellen (232, 233) mindestens einen vorgegebenen Wert aufweist und/oder auf Angaben in den eingelesenen Daten aus der mindestens einen Datenquelle basiert.

4. Verfahren gemäß einem der Ansprüche 1 bis 3, wobei der mindestens eine Wert, der einer für einen jeweiligen Satz Koordinaten definierten Fläche zugeordnet wird, für mindestens eine der Datenquellen (232)
- ein einheitlicher Wert für die ganze Fläche ist; oder
- ein über der Fläche variierender Wert ist; oder
- einen maximalen Wert umfasst, der zumindest einem dem Satz Koordinaten entsprechenden Zentrum der Fläche zugeordnet ist, und weitere Werte, die der Fläche derart zugeordnet sind, dass sie mit wachsendem Abstand zum Zentrum der Fläche kontinuierlich oder in Stufen kleiner werden; oder
- eine Mehrzahl von Werten umfassen, die der Fläche derart zugeordnet sind, dass sie mit wachsendem Abstand zu einem durch den Satz Koordinaten definierten Ort zumindest bis zu einem Maximalwert kontinuierlich oder in Stufen größer werden.

5. Verfahren gemäß einem der Ansprüche 1 bis 4, wobei mindestens einem der Sätze von Koordinaten, die sich aus den Daten von mindestens einer der Datenquellen (230) bestimmen lassen, ein Zeitpunkt zugeordnet ist, und wobei die Größe und/oder der zugeordnete Wert der Fläche für den mindestens einen Satz von Koordinaten abhängig von dem für diesen Satz Koordinaten angegebenen Zeitpunkt bestimmt wird.

6. Verfahren gemäß einem der Ansprüche 1 bis 5, wobei bei dem Zusammenfassen der Flächen für mindestens eine der Datenquellen (233) allen nicht-überlappenden Flächen ein einheitlicher Wert zugeordnet wird.

7. Verfahren gemäß einem der Ansprüche 1 bis 6, wobei bei dem Zusammenfassen der Flächen für mindestens eine der Datenquellen (230) die den definierten Flächen zugeordneten Werte in überlappenden Bereichen der definierten Flächen kumuliert werden.

8. Verfahren gemäß einem der Ansprüche 1 bis 7, wobei für mindestens eine der Datenquellen (232) für jeden Satz Koordinaten jeweils eine Fläche mit zugeordnetem Wert definiert wird, die eine Aussparung um den durch den Satz Koordinaten definierten Ort herum aufweist, und wobei das Zusammenfassen für die mindestens eine der Datenquellen (232) in einer nicht-überlappenden Fläche (601) mit Aussparungen (602) um alle durch die Sätze Koordinaten definierten Orte (603) resultiert.

9. Verfahren gemäß einem der Ansprüche 1 bis 8, ferner umfassend:
- Erfassen einer Nutzereingabe, die eine Gewichtung für die mindestens zwei Datenquellen vorgibt; und
- Verwenden der vorgegebenen Gewichtungen zur Einstellung des Einflusses der mindestens zwei Datenquellen auf die Werteverteilung.

10. Verfahren gemäß Anspruch 9, wobei das Verwenden der vorgegebenen Gewichtungen zur Einstellung des Einflusses der mindestens zwei Datenquellen auf die Werteverteilung umfasst:
- Gewichten der den nicht-überlappenden Flächen zugeordneten Werte für jede der mindestens zwei Datenquellen gemäß der vorgegebenen Gewichtung vor der Überlagerung der nicht-überlappenden Flächen; oder
- Bestimmen der Werte der definierten Flächen für jede der mindestens zwei Datenquellen unter Berücksichtigung der vorgegebenen Gewichtung.

11. Verfahren gemäß einem der Ansprüche 1 bis 10, ferner umfassend Speichern von Daten zu den nicht-überlappenden Flächen und den zugeordneten Werten für mindestens eine der Datenquellen als Grundlage für eine wiederholte Überlagerung.

12. Verfahren gemäß einem der Ansprüche 1 bis 11, ferner umfassend mindestens eine der folgenden Schritte:
- Präsentieren eines, die Werteverteilung veranschaulichenden, dreidimensionalen Profils mittels einer Anzeigeeinheit (170);
- Präsentieren eines, die Werteverteilung veranschaulichenden, dreidimensionalen Profils zusammen mit einem Straßennetz mittels einer Anzeigeeinheit (170);
- Bereitstellen der Werteverteilung für eine Streckenberechnung; und
- Durchführen einer Streckenberechnung unter Berücksichtigung der Werteverteilung.

13. Verfahren gemäß einem der Ansprüche 1 bis 12, wobei die mindestens zwei Datenquellen mindestens eine der folgenden umfassen:
- eine Datenquelle (230), die Daten bereitstellt, aus denen sich Sätze von Koordinaten zu Orten mit Bezug auf mindestens eine Art von Ereignissen oder Vorkommnissen bestimmen lassen;
- eine Datenquelle (231), die Daten bereitstellt, aus denen sich Sätze von Koordinaten zu Orten mit Bezug auf mindestens eine Art von örtlichen Gegebenheiten bestimmen lassen;
- eine Datenquelle (233), die Daten bereitstellt, aus denen sich Sätze von Koordinaten zu Orten von mindestens einer Art von örtlichen Situationen bestimmen lassen; und
- eine Datenquelle (232), die Daten bereitstellt, aus denen sich Sätze von Koordinaten zu einer bestimmten Art von Einrichtung bestimmen lassen.

14. Vorrichtung (100) umfassend Mittel (110, 120, 130, 140, 150, 160, 170) zur Ausführung des Verfahrens gemäß einem der Ansprüche 1 bis 13.

15. System umfassend mindestens zwei Vorrichtungen (100, 220, 260) mit Mitteln zur verteilten Ausführung des Verfahrens gemäß einem der Ansprüche 1 bis 13.

16. Programm (121) umfassend
- Programmanweisungen (122), wobei die Programmanweisungen (122) bei Ausführung durch einen Prozessor (110) eine Vorrichtung (100) zur Ausführung des Verfahrens gemäß einem der Ansprüche 1 bis 13 veranlassen.
